(19) Europäisches Patentamt
European Patent Office
Office européen des brevets

(11) **EP 3 917 893 B1**

(12) **FASCICULE DE BREVET EUROPEEN**

(45) Date de publication et mention de la délivrance du brevet:
**18.10.2023 Bulletin 2023/42**

(21) Numéro de dépôt: **20705443.8**

(22) Date de dépôt: **28.01.2020**

(51) Classification Internationale des Brevets (IPC):
**C03C 17/00** (2006.01)    **C03C 17/42** (2006.01)
**C03C 23/00** (2006.01)

(52) Classification Coopérative des Brevets (CPC):
**C03C 23/001; C03C 17/38; C03C 17/42;**
C03C 2217/445; C03C 2217/47; C08K 3/04

(86) Numéro de dépôt international:
**PCT/FR2020/050124**

(87) Numéro de publication internationale:
**WO 2020/157423 (06.08.2020 Gazette 2020/32)**

(54) **PROCEDE D'OBTENTION D'UN SUBSTRAT REVETU D'UNE COUCHE FONCTIONNELLE**

VERFAHREN ZUR HERSTELLUNG EINES MIT EINER FUNKTIONALEN SCHICHT BESCHICHTETEN SUBSTRATS

METHOD FOR OBTAINING A SUBSTRATE COATED WITH A FUNCTIONAL LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2019 FR 1900793**

(43) Date de publication de la demande:
**08.12.2021 Bulletin 2021/49**

(73) Titulaire: **Saint-Gobain Glass France**
**92400 Courbevoie (FR)**

(72) Inventeurs:
• **DESBOEUFS, Nicolas**
**60200 COMPIEGNE (FR)**
• **SCHWEITZER, Jean-Philippe**
**60300 CHAMANT (FR)**
• **HUIGNARD, Arnaud**
**60200 COMPIEGNE (FR)**
• **MAILLAUD, Laurent**
**91300 MASSY (FR)**
• **DEVYS, Lucie**
**75019 PARIS (FR)**
• **MIMOUN, Emmanuel**
**92100 BOULOGNE-BILLANCOURT (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2010/139908    US-A1- 2010 316 828**

**Description**

L'invention se rapporte à l'obtention de substrats revêtus d'au moins une couche fonctionnelle.

Certaines couches fonctionnelles nécessitent des traitements thermiques, soit pour améliorer leurs propriétés, soit même pour leur conférer leur fonctionnalité. On peut citer à titres d'exemples les couches fonctionnelles bas-émissives à base d'argent ou d'oxydes transparents conducteurs (TCO) dont l'émissivité et la résistivité électrique sont abaissées suite à des traitements thermiques. Des couches photocatalytiques à base d'oxyde de titane sont également plus actives après traitement thermique, car ce dernier favorise la croissance cristalline. Des traitements thermiques permettent également de créer de la porosité dans des couches à base de silice pour abaisser leur facteur de réflexion lumineuse.

On connaît de la demande WO 2010/139908 une méthode de traitement thermique au moyen d'un rayonnement, notamment un rayonnement laser infrarouge focalisé sur la couche. Un tel traitement permet de chauffer très rapidement la couche sans échauffer le substrat de manière significative. Typiquement, la température en tout point de la face du substrat opposée à celle portant la couche ne dépasse pas 150°C, voire 100°C durant le traitement. D'autres types de rayonnement, comme celui issu de lampes flash sont également utilisables dans le même but.

Certaines couches absorbent toutefois très peu le rayonnement infrarouge, de sorte que la majeure partie de l'énergie du rayonnement traverse le matériau sans l'échauffer de manière significative. Pour pallier à cela, il a été proposé d'ajouter une couche absorbant le rayonnement au revêtement à traiter.

Afin de pouvoir traiter à grande vitesse des substrats de grande largeur, tels que les feuilles de verre plat de taille « jumbo » (6 m x 3 m) sortant des procédés de *float,* il est nécessaire de disposer de lignes laser elles-mêmes très longues (>3m). Or, il est difficile dans la pratique d'assurer une puissance stable à la fois sur l'ensemble de la ligne et dans le temps. Les surintensités et/ou des sous-intensités de puissance le long de la ligne laser provoquent des inhomogénéités de traitement des parties du substrat passant sous ces zones par rapport au reste du substrat. Il en va de même des variations de la largeur de la ligne laser. Les inhomogénéités de traitement peuvent également être induites par les systèmes de convoyage du fait d'une irrégularité dans la vitesse de déplacement ou encore de vibrations faisant varier la position du substrat par rapport au plan focal du laser. Pour certaines couches, ces inhomogénéités de traitement peuvent suffire pour occasionner des défauts visibles sur le produit final (notamment variation de transmission optique créant un lignage dans le sens du déplacement ou perpendiculaire à celui-ci). Un phénomène identique peut apparaître lors du traitement de substrats de grande taille à l'aide de lampes flash, notamment au niveau des recouvrements de zones de traitement.

D'autre part, des variations dans le convoyage du substrat, par exemple sur la vitesse de convoyage ou la position du substrat par rapport à la source du rayonnement, peuvent également faire varier la quantité d'énergie impactant le revêtement et affecter ainsi l'homogénéité de traitement.

La présente invention propose d'améliorer encore ce procédé par l'utilisation d'une couche absorbant en grande partie le rayonnement et ne laissant passer qu'une quantité négligeable de celui-ci.

La présente invention a donc pour objet un procédé d'obtention d'un matériau comprenant un substrat revêtu sur une de ses faces d'un revêtement comprenant une couche fonctionnelle, ledit procédé comprenant :

- une étape de dépôt de la couche fonctionnelle sur le substrat, puis
- une étape de dépôt d'une couche absorbante au-dessus de ladite couche fonctionnelle, puis
- une étape de traitement thermique au moyen d'un rayonnement, ledit rayonnement possédant au moins une longueur d'onde de traitement comprise entre 200 et 2500 nm, ladite couche absorbante étant au contact de l'air durant cette étape de traitement thermique,
  caractérisé en ce que la couche absorbante absorbe au moins 80% du rayonnement utilisé lors du traitement thermique et transmet moins de 10% de celui-ci.

La présente invention a donc pour objet un procédé d'obtention d'un matériau comprenant un substrat revêtu sur une de ses faces d'un revêtement comprenant une couche fonctionnelle, ledit procédé comprenant :

- une étape de dépôt de la couche fonctionnelle sur le substrat, puis
- une étape de dépôt d'une couche absorbante au-dessus de ladite couche fonctionnelle, puis
- une étape de traitement thermique au moyen d'un rayonnement, ledit rayonnement possédant au moins une longueur d'onde de traitement comprise entre 200 et 2500 nm, ladite couche absorbante étant au contact de l'air durant cette étape de traitement thermique,
  caractérisé en ce que la couche absorbante présente un ratio absorption/transmission du rayonnement utilisé lors du traitement thermique supérieur à 8.

La présente invention a également pour objet un procédé d'obtention d'un matériau comprenant un substrat revêtu sur une de ses faces d'un revêtement comprenant une couche fonctionnelle, ledit procédé comprenant :

- une étape de dépôt de la couche fonctionnelle sur le substrat, puis
- une étape de dépôt d'une couche absorbante au-dessus de ladite couche fonctionnelle, puis
- une étape de traitement thermique au moyen d'un rayonnement, ledit rayonnement possédant au moins une longueur d'onde de traitement comprise entre 200 et 2500 nm, ladite couche absorbante étant au contact de l'air durant cette étape de traitement thermique,
caractérisé en ce que la couche absorbante comprend au moins 5%, de préférence au moins 10%, plus préférentiellement au moins 30%, voire au moins 50%, ou même au moins 60%, en poids de particules de carbone.

Un autre objet de l'invention est un matériau comprenant un substrat revêtu sur au moins une de ses faces d'un revêtement comprenant une couche fonctionnelle et une couche absorbante située au-dessus de la couche fonctionnelle caractérisé en ce que la couche absorbante comprend au moins 5%, de préférence au moins 10%, plus préférentiellement au moins 30%, voire au moins 50%, ou même au moins 60%, en poids de particules de carbone. Ce matériau correspond à un matériau intermédiaire du procédé selon l'invention, la couche absorbante étant généralement éliminée à l'issue du traitement thermique ou après un stockage subséquent.

Toutes les caractéristiques ou tous les modes de réalisation décrits ci-après s'appliquent aussi bien au procédé qu'au matériau selon l'invention.

L'absorption est définie comme étant égale à la valeur de 100% auxquelles sont soustraites la transmission et la réflexion (spectrale et diffuse) de la couche. Elle peut de manière connue être déduite de mesures réalisées à l'aide d'un spectrophotomètre muni d'une sphère intégrante. La couche absorbante absorbe au moins 80%, de préférence au moins 85%, voire au moins 90% du rayonnement utilisé lors du traitement thermique. La plus grande partie de l'énergie du rayonnement est ainsi absorbée par la couche absorbante et transférée au revêtement, notamment la couche fonctionnelle, par diffusion thermique. La couche absorbante ne laisse passer qu'une quantité négligeable du rayonnement. La couche absorbante transmet typiquement moins de 10%, voire moins de 5% ou même moins de 1% du rayonnement). Le reste du revêtement, notamment la couche fonctionnelle, n'est ainsi directement impacté que par une portion négligeable du rayonnement, ce qui a pour effet de réduire fortement la sensibilité du revêtement aux inhomogénéités de traitement. Sans vouloir être lié à une quelconque théorie, il semble que, par un processus d'absorption-diffusion de l'énergie, la couche absorbante selon l'invention permette une répartition plus homogène de l'énergie au revêtement comparé aux procédés connus dans lesquels, même en présence de couches absorbantes, une partie non négligeable du rayonnement impact directement le revêtement. Il en résulte une atténuation, voire une élimination des défauts, notamment optiques, attribués aux inhomogénéités de traitement dues aux variations de densité puissance du rayonnement et/ou aux irrégularités dans le convoyage du substrat. La meilleure tolérance vis-à-vis des inhomogénéités de traitement obtenue à l'aide du procédé selon l'invention permet en outre d'abaisser les exigences relatives aux systèmes optiques et/ou aux systèmes de convoyage, et d'en réduire ainsi les coûts d'investissement et de maintenance.

Le substrat est de préférence une feuille de verre, de vitrocéramique, ou d'une matière organique polymérique. Il est de préférence transparent, incolore (il peut s'agir alors d'un verre clair ou extra-clair) ou coloré, par exemple en bleu, vert, gris ou bronze. Le verre est de préférence de type silico-sodo-calcique, mais il peut également être en verre de type borosilicate ou alumino-borosilicate, notamment pour les applications à haute température (portes de four, inserts de cheminée, vitrages anti-feu). Les matières organiques polymériques préférées sont le polycarbonate ou le polyméthacrylate de méthyle ou encore le polyéthylènetérephtalate (PET). Le substrat présente avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 1 et 8 mm, voire entre 4 et 6 mm. Le substrat peut être plan ou bombé, voire flexible.

Le substrat de verre est de préférence du type flotté, c'est-à-dire susceptible d'avoir été obtenu par un procédé consistant à déverser le verre fondu sur un bain d'étain en fusion (bain « float »). Dans ce cas, la couche à traiter peut aussi bien être déposée sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre. Le substrat de verre peut également être obtenu par laminage entre deux rouleaux, technique permettant en particulier d'imprimer des motifs à la surface du verre.

On entend par verre clair un verre silico-sodo-calcique obtenu par flottage, non revêtu de couches, et présentant une transmission lumineuse de l'ordre de 90%, une réflexion lumineuse de l'ordre de 8% et une transmission énergétique de l'ordre de 83% pour une épaisseur de 4 mm. Les transmissions et réflexions lumineuses et énergétiques sont telles que définies par la norme NF EN 410. Des verres clairs typiques sont par exemple commercialisés sous la dénomination SGG Planilux par la société Saint-Gobain Glass France ou sous la dénomination Planibel Clair par la société AGC Flat Glass Europe. Ces substrats sont classiquement employés pour la fabrication de vitrages bas-émissifs.

La couche fonctionnelle, ainsi qu'éventuellement l'ensemble des couches déposées sur ou sous celle-ci, sont typiquement des couches minces, au sens où leur épaisseur est généralement de 0,5 nm à 10 $\mu$m, plus généralement de 1 nm à 1 $\mu$m. Par « épaisseur » on entend l'épaisseur physique dans l'ensemble du présent texte.

La couche fonctionnelle et la couche absorbante sont de préférence déposées sur au moins 90% de la surface du substrat. Dans certains modes de réalisation, la couche absorbante peut cependant être déposée sur une partie seulement de la surface du substrat, notamment sur une région périphérique, sur une région centrale, ou encore de façon à créer un motif, par exemple un motif périodique ou un logo.

Dans la présente demande, les termes « sous » ou « au-dessous » et « sur » ou « au-dessus », associés à la position d'une première couche par rapport à une deuxième couche, signifient que la première couche est plus proche, respectivement plus éloignée, du substrat que la deuxième couche. Ces termes n'excluent cependant pas la présence d'autres couches entre lesdites première et deuxième couches. Au contraire, une première couche « en contact direct » avec une deuxième couche signifie qu'aucune autre couche n'est disposée entre celles-ci. Il en va de même pour les expressions « directement sur » ou « directement au-dessus » et « directement sous » ou « directement au-dessous ». Ainsi, il est entendu que, sauf s'il est indiqué autrement, d'autres couche peuvent être intercalées entre chacune des couches de l'empilement.

Dans l'ensemble du texte, on entend par « à base de » le fait qu'une couche comprenne généralement au moins 50% en poids de l'élément considéré (métal, oxyde etc...), de préférence au moins 60% et même 70% ou 80%, voire 90%, 95% ou 99% en poids de cet élément. Dans certains cas, la couche est constituée de cet élément, sauf impuretés.

La couche fonctionnelle apporte de préférence au substrat revêtu au moins une fonctionnalité choisie parmi une faible émissivité, une faible résistivité électrique, un effet antireflet, une fonction autonettoyante ou de facilité de nettoyage.

De préférence la couche fonctionnelle est choisie parmi les couches à base d'un métal, notamment l'argent, les couches à base d'oxyde de titane, les couches à base de silice ou les couches à base d'un oxyde transparent électro-conducteur.

La couche fonctionnelle peut être la seule couche déposée sur le substrat (en plus de la couche absorbante). Alternativement, la couche fonctionnelle peut être comprise dans un empilement de couches minces. On qualifie de « revêtement » l'ensemble comprenant la(les) couche(s) fonctionnelle(s), la couche absorbante, ainsi que le cas échéant toute autre couche déposée sur la même face du substrat. Le revêtement peut comprendre une pluralité de couches fonctionnelles, notamment deux, trois, ou quatre couches fonctionnelles.

L'épaisseur de la ou de chaque couche fonctionnelle est typiquement comprise entre 1 nm et 5 $\mu$m, notamment entre 2 nm et 2 $\mu$m, plus particulièrement entre 10 nm et 1 $\mu$m.

Selon un mode de réalisation préféré, la couche fonctionnelle est à base d'un métal, typiquement l'argent, ou encore l'or, le molybdène ou le niobium. La couche fonctionnelle est de préférence constituée de ce métal. De tels métaux possèdent des propriétés de faible émissivité et de faible résistivité électrique, si bien que les substrats revêtus peuvent servir à la fabrication de vitrages à isolation thermique renforcée, de vitrages chauffants ou encore d'électrodes. L'épaisseur de la couche fonctionnelle est alors de préférence comprise dans un domaine allant de 2 à 20 nm.

Dans ce mode de réalisation, le revêtement comprend au moins une couche fonctionnelle métallique, par exemple une, deux ou trois couches fonctionnelles, chacune étant généralement disposée entre au moins deux couches diélectriques, typiquement des couches d'oxyde, de nitrure ou d'oxynitrure, par exemple des couches de nitrure de silicium, d'oxyde de zinc et/ou d'étain, d'oxyde de titane etc... Ce type de revêtement est de préférence entièrement déposé par pulvérisation cathodique, notamment assistée par champ magnétique (procédé magnétron) - à l'exception le cas échéant de la couche absorbante.

Selon un autre mode de réalisation préféré, la couche fonctionnelle est une couche à base d'oxyde de titane, notamment une couche constituée ou essentiellement constituée d'oxyde de titane.

Les couches minces à base d'oxyde de titane ont la particularité d'être autonettoyantes, en facilitant la dégradation des composés organiques sous l'action de rayonnements ultraviolets (phénomène de photocatalyse) et l'élimination des salissures minérales (poussières) sous l'action d'un ruissellement d'eau. Le dioxyde de titane cristallisé sous la forme anatase est bien plus efficace en termes de dégradation des composés organiques que le dioxyde de titane amorphe ou cristallisé sous la forme rutile ou brookite. L'oxyde de titane peut éventuellement être dopé par un ion métallique, par exemple un ion d'un métal de transition, ou par des atomes d'azote, de carbone, de fluor.... L'oxyde de titane peut également être sous-stœchiométrique ou sur-stœchiométrique en oxygène ($TiO_2$ ou $TiO_x$).

La couche à base d'oxyde de titane est préférentiellement déposée par pulvérisation cathodique magnétron. Cette technique ne permet toutefois pas d'obtenir des couches très actives, car l'oxyde de titane qu'elles contiennent est peu voire pas cristallisé. Le traitement thermique est alors nécessaire pour conférer des propriétés autonettoyantes appréciables. Afin d'améliorer ces propriétés, il est préférable, en particulier lorsque substrat est destinée à subir un traitement thermique prolongé, par exemple un traitement de trempe ou de bombage, d'insérer entre le substrat et la couche en oxyde de titane au moins une couche barrière à la migration des alcalins, notamment choisie parmi les couches à base de silice, d'oxycarbure de silicium, d'alumine, de nitrure de silicium.

Selon un autre mode de réalisation préféré, la couche fonctionnelle est une couche à base d'un oxyde transparent électro-conducteur. L'oxyde transparent électro-conducteur est de préférence choisi parmi les couches d'oxyde d'étain et d'indium (ITO), les couches d'oxyde de zinc dopé à l'aluminium ou au gallium et les couches d'oxyde d'étain dopé au fluor ou à l'antimoine.

Ce type de couches confère des propriétés de conduction électrique mais aussi de faible émissivité, permettant au matériau d'être employé dans la fabrication de vitrages isolants, de vitrages anticondensation, ou d'électrodes, par exemple pour cellules photovoltaïques, pour écrans de visualisation ou pour dispositifs d'éclairage.

Selon encore un autre mode de réalisation préféré, la couche fonctionnelle est une couche à base de silice. Ce type de couches absorbe peu dans le domaine de longueurs d'onde considéré, en particulier dans le proche infrarouge, si bien qu'en l'absence de couche absorbante le traitement thermique est inefficace.

La couche à base de silice est de préférence, après traitement thermique, essentiellement constituée voire constituée de silice. La couche à base de silice est avantageusement antireflets, au sens où le facteur de réflexion lumineuse côté couche est d'au plus 6%, notamment 5% après traitement thermique, lorsque la couche est déposée sur une seule face d'un substrat de verre (la valeur tient donc compte de la réflexion de la face opposée non revêtue, qui est d'environ 4%).

Selon une première variante, la couche à base de silice comprend avant traitement thermique du silicium, de l'oxygène, du carbone et éventuellement de l'hydrogène, ces deux derniers éléments étant au moins partiellement éliminés lors du traitement thermique de manière à obtenir une couche poreuse essentiellement constituée de silice. Cette couche est préférentiellement déposée par pulvérisation cathodique magnétron d'une cible en silicium ou en silice ou par dépôt chimique en phase vapeur assisté par plasma en utilisant comme précurseur de silicium un composé organométallique tel que par exemple l'hexaméthyldisiloxane.

Selon une deuxième variante, la couche à base de silice comprend avant traitement thermique une matrice de silice et des agents porogènes, ces derniers étant éliminés lors du traitement thermique de manière à obtenir une couche poreuse essentiellement constituée de silice. Les agents porogènes sont de préférence organiques, notamment polymériques, par exemple en polyméthacrylate de méthyle, leur taille moyenne étant de préférence comprise dans un domaine allant de 20 à 200 nm. Cette couche est préférentiellement déposée par un procédé du type sol-gel.

La couche fonctionnelle peut être obtenue par tout type de procédé de dépôt de couche mince. Il peut par exemple s'agir de procédés de type sol-gel, pyrolyse (liquide ou solide), dépôt chimique en phase vapeur (CVD), notamment assisté par plasma (APCVD), éventuellement sous pression atmosphérique (APPECVD), évaporation, pulvérisation cathodique, notamment assistée par un champ magnétique (procédé magnétron). Dans ce dernier procédé, un plasma est créé sous un vide poussé au voisinage d'une cible comprenant les éléments chimiques à déposer. Les espèces actives du plasma, en bombardant la cible, arrachent lesdits éléments, qui se déposent sur le substrat en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler le substrat sous différentes cibles, ce généralement dans un seul et même dispositif. Il est ainsi possible d'obtenir de cette manière l'empilement complet, contenant le cas échéant la couche absorbante.

La couche absorbante comprend typiquement un agent absorbant aux longueurs d'onde du rayonnement. Il est de préférence sous forme de particules. L'agent absorbant peut être tout pigment minéral ou organique absorbant aux longueurs d'onde du rayonnement. Des exemples de pigment organique comprennent le bitume, les pérylènes tels que le noir de pérylène, le rouge de pérylène, le bordeaux de pérylène les quinacridones tels que le Magenta de quinacridone, le rouge de quinacridone, les phtalocyanines tels que la phtalocyanine de cuivre, la phtalocyanine de cuivre bromé, les azoïques tels que la Méthylorange, le Phénylazophénol, la tartrazine, les particules carbonées tels que le noir de carbone ou le graphite. Des exemples de pigment minéral comprennent les oxydes métalliques tels que l'oxyde de fer, l'oxyde de manganèse, le dioxyde de titane, l'oxyde de zinc, les sulfures métalliques tels que le sulfure de sodium, le sulfure de cadmium ou le sulfure de mercure. La quantité d'agent absorbant dans la couche absorbante ainsi que l'épaisseur de la couche absorbante doivent être adaptées en fonction de la nature de l'agent absorbant pour obtenir une couche absorbante selon l'invention absorbant au moins 80% du rayonnement.

L'agent absorbant est de préférence choisi parmi les particules de carbone. Elles ont en effet l'avantage de présenter un large spectre d'absorption. Les couches absorbantes comprenant des particules de carbone peuvent donc être adaptées à des sources de rayonnement émettant dans différentes longueurs d'onde. Les particules de carbone peuvent être choisies parmi les particules de noir de carbone, de graphite, de graphène, de nanotubes de carbone, ou les mélanges de ceux-ci. Les particules de noir de carbone sont cependant préférées notamment pour des raisons économiques. Les particules de carbone présentent typiquement une taille moyenne de 100 à 1500 nm, de préférence de 150 à 1200 nm. La taille des particules est déterminée par diffusion dynamique de la lumière.

La couche absorbante comprend de préférence au moins 5%, plus préférentiellement au moins 8%, voire au moins 10%, en poids d'agent absorbant. Dans un mode de réalisation particulier, la couche absorbante peut être principalement à base d'agent absorbant, c'est-à-dire qu'elle peut comprendre au moins 50%, de préférence au moins 60%, en poids d'agent absorbant. Elle peut comprendre jusqu'à 90%, voire 80%, en poids d'agent absorbant.

La couche absorbante a typiquement une épaisseur de 0,5 $\mu$m, voire 0,7 $\mu$m, 0,8 $\mu$m, ou même 0,8 $\mu$m, à 50 $\mu$m, voire 20 $\mu$m, 10 $\mu$m, ou même 5 $\mu$m.

Dans un premier mode de réalisation, la couche absorbante comprend un agent absorbant dispersé dans une matrice organique. La matrice organique peut être à base de polymères solubles dans l'eau, dispersables dans l'eau et/ou éliminables par décomposition thermique au moins en partie lors du traitement thermique selon l'invention. Dans ce mode de réalisation la couche absorbante présente typiquement une épaisseur de 1 à 50 $\mu$m, de préférence de 2 à 30 $\mu$m, voire de 3 à 10 $\mu$m.

Des exemples de matrices organiques appropriées comprennent des polymères comprenant un ou plusieurs homopolymères ou copolymères d'amidon, de caséine, d'acrylates, d'acrylamide, de glycols tel que l'éthylène glycol, d'acétate de vinyle, d'alcool vinylique, de vinylpyrrolidone, des copolymères styrène/acide acrylique, des copolymères éthylène/acide acrylique, de la cellulose ou ses dérivés tels que la méthlycellulose, l'éthylcellulose, l'hydroxypropylméthylcellulose ou la carboxyméthylcellulose.

Dans une première variante, la matrice organique est soluble et/ou dispersable dans l'eau. La couche absorbante peut alors être obtenue à partir d'une solution de revêtement, de préférence à base aqueuse, comprenant un polymère filmogène soluble ou dispersable dans l'eau, de préférence à base d'alcool vinylique, et un agent absorbant. La solution de revêtement comprend typiquement jusqu'à 30% en poids, de préférence jusqu'à 24% en poids, voire 5 à 12% en poids, de polymère filmogène par rapport au poids total de la solution. La quantité d'agent absorbant dans la solution de revêtement est déterminée en fonction de la quantité désirée dans la couche absorbante. Elle est typiquement de 5% à 20% en poids par rapport au poids total de matière sèche. La solution de revêtement peut également comprendre des additifs conventionnels tels que des tensioactifs, des agents rhéologiques, des agents anti-mousse, ou encore des charges minérales.

La solution de revêtement peut être déposée sur le substrat revêtu par toute méthode conventionnelle de dépôt en phase liquide telle qu'un dépôt par pulvérisation (*spray coating*), par aspersion (*flow coating*), par rideau (*certain coating*) ou par enduction au rouleau (*roller coating*). Elle peut également être déposée par des méthodes d'impression telles que l'impression à jet d'encre, la flexographie ou la sérigraphie, notamment pour l'obtention de motifs.

Dans une seconde variante, la matrice organique est non soluble ou dispersable dans l'eau. Dans ce cas, la matrice organique est de préférence à base de polymère acrylate. La couche absorbante est alors typiquement obtenue à partir d'une composition liquide comprenant des composés (méth)acrylate, de préférence choisis parmi des monomères, des oligomères, des prépolymères ou des polymères comprenant au moins une fonction (méth)acrylate. La composition liquide, de préférence essentiellement exempte de solvant, peut être déposée sur le substrat revêtu par toute méthode conventionnelle de dépôt en phase liquide, notamment par enduction au rouleau (roller coating). Elle peut ensuite être polymérisée de préférence par irradiation UV, par cuisson ou par bombardement d'un faisceau d'électrons.

Par « (méth)acrylate », on entend de façon équivalente acrylate ou méthacrylate. Par « composés (méth)acrylate », on entend les esters de l'acide acrylique ou méthacrylique comportant au moins une fonction acroyle (CH2=CH-CO-) ou méthacroyle (CH2=CH(CH3)-CO-). Ces esters peuvent être des monomères, des oligomères, des prépolymères ou des polymères. Les composées (méth)acrylate utilisés peuvent être des (méth)acrylates monofonctionnels ou polyfonctionnels, notamment di-, tri-, tétra-, penta- ou hexa-fonctionnels. Des exemples de tels composés sont :

- les (méth)acrylates monofonctionnels tels que le méthyl(méth)acrylate, éthyl(méth)acrylate, n- ou ter-butyl(méth)acrylate, hexyl(méth)acrylate, cyclohexyl(méth)acrylate, 2-éthylhexyl(méth)acrylate, benzyl(méth)acrylate, 2-éthoxyethyl(méth)acrylate, phenyloxyethyl(méth)acrylate, hydroxyethylacrylate, hydroxypropyl(méth)acrylate, vinyl(méth)acrylate caprolactone acrylate, isobornyl méthacrylate, lauryl méthacrylate, polypropylène glycol monométhacrylate,
- les (méth)acrylates difonctionnels tels que 1,4-butanediol di(méth)acrylate, éthylène diméthacrylate, 1,6-hexandiol di(méth)acrylate, bisphénol A di(méth)acrylate, triméthylolpropane diacrylate, triéthylène glycol diacrylate, éthylène glycol di(méth)acrylate, polyéthylène glycol di(méth)acrylate, le tricyclodécane diméthanol diacrylate,
- les (méth)acrylates trifonctionnels tels que triméthylolpropane triméthacrylate, triméthylolpropane triacrylate, pentaérythritol triacrylate, ethoxylated trimethylolpropane triacrylate, trimethylolpropane triméthacrylate, tripropylène glycol triacrylate,
- les (méth)acrylate de fonctionnalité supérieure tels que pentaérythritol tétra(méth)acrylate, ditriméthylpropane tétra(méth)acrylate, dipentaérythritol penta(méth)acrylate ou hexa(méth)acrylate.

Outre les composés (méth)acrylate, la composition liquide comprend une quantité d'agent absorbant correspondant à quantité désirée dans la couche absorbante. Elle est typiquement de 5% à 20% en poids par rapport au poids total. La composition liquide comprend en outre un initiateur de polymérisation dont la nature est fonction du type de polymérisation choisi. Par exemple, en cas de polymérisation thermique, on utilise des initiateurs de type peroxyde de benzoyle. En cas de durcissement par rayonnement UV, on utilise des initiateurs dits photoinitiateurs. La composition liquide peut comprendre d'autres additifs tels que des charges minérales ou des agents rhéologiques. Selon un mode de réalisation avantageux, la couche de protection temporaire ne comprend pas de charge minérale autre que le noir de carbone, ni d'additifs non susceptibles d'être éliminés lors du traitement thermique tels que des composés organiques comprenant du silicium de type siloxanes.

Dans un deuxième mode de réalisation la couche absorbante est constituée principalement de l'agent absorbant, c'est-à-dire qu'elle comprend typiquement de 50 à 90% en poids d'agent absorbant. Dans ce cas, la couche absorbante est généralement obtenue à partir d'une suspension d'agent absorbant dans un solvant (notamment alcoolique, aqueux ou d'un mélange eau-alcool), éventuellement additionnée de tensioactifs. La suspension comprend typiquement 1 à 10% en poids d'agent absorbant. La suspension peut être déposée sur le substrat revêtu par toute méthode conventionnelle de dépôt en phase liquide telle qu'un dépôt par pulvérisation (*spray coating*), par aspersion (*flow coating*), par rideau (*certain coating*) ou par enduction au rouleau (*roller coating*). Elle peut également être déposée par des méthodes d'impression telles que l'impression à jet d'encre, la flexographie ou la sérigraphie, notamment pour l'obtention de motifs. Le dépôt est ensuite séché pour éliminer le solvant et obtenir une couche absorbante ayant typiquement une épaisseur de 0,5 à 5 $\mu$m, de préférence de 0,7 à 4 $\mu$m, voire de 0,8 à 3 $\mu$m.

La couche absorbante est en contact avec une atmosphère oxydante, généralement l'air, durant l'étape de traitement thermique selon l'invention. En d'autres termes, la couche absorbante constitue la dernière couche du revêtement. En particulier, dans le cas de pluralité de couches fonctionnelles, la couche absorbante est située au-dessus de la couche fonctionnelle la plus éloignée du substrat.

Lors du traitement thermique selon l'invention, le rayonnement est en grande partie absorbé par la couche absorbante et l'énergie absorbée est restituée par diffusion au reste du revêtement permettant ainsi le recuit de celui-ci sans impact direct significatif du revêtement, notamment de la couche fonctionnelle, par le rayonnement.

Après l'étape de traitement thermique la couche absorbante peut être aisément éliminée par lavage à l'aide d'un solvant, de préférence l'eau. En effet, même dans le cas d'une couche absorbante à base d'une matrice organique non soluble ou dispersable dans l'eau, le traitement thermique a pour effet de décomposer au moins en partie ladite matrice, permettant ainsi l'élimination des résidus par simple lavage.

Quel que soit le mode de réalisation, l'utilisation de particules de carbone comme agent absorbant est avantageux, celles-ci pouvant être éliminées en partie au cours du traitement thermique selon l'invention. Ainsi, plus la proportion de particules de carbone est importante dans la couche absorbante, plus le résidu de couche absorbante après traitement thermique est éliminable facilement. De plus, dans le cas d'une couche principalement à base de de particules de carbone, la combinaison d'une concentration élevée de particules de carbone associée aux fortes propriétés d'absorption de celles-ci permet l'obtention de couches très absorbantes et relativement fine, favorisant les échanges thermiques avec le revêtement, et par conséquent l'efficacité du traitement. Les couches absorbantes principalement à base de particules de carbone sont préférées pour ces raisons.

Lors du traitement thermique, le rayonnement est de préférence choisi parmi un rayonnement laser, un rayonnement issu d'au moins une lampe infra-rouge, ou un rayonnement issu d'au moins une lampe flash.

Selon un premier mode de réalisation préféré, le rayonnement est issu d'au moins une lampe flash.

De telles lampes se présentent généralement sous la forme de tubes en verre ou en quartz scellés et remplis d'un gaz rare, munis d'électrodes à leurs extrémités. Sous l'effet d'une impulsion électrique de courte durée, obtenue par décharge d'un condensateur, le gaz s'ionise et produit une lumière incohérente particulièrement intense. Le spectre d'émission comporte généralement au moins deux raies d'émission ; il s'agit de préférence d'un spectre continu présentant un maximum d'émission dans le proche ultraviolet et s'étendant jusqu'au proche infrarouge. Dans ce cas, le traitement thermique met en œuvre un continuum de longueurs d'onde de traitement.

La lampe est de préférence une lampe au xénon. Elle peut également être une lampe à l'argon, à l'hélium ou au krypton. Le spectre d'émission comprend de préférence plusieurs raies, notamment à des longueurs d'onde allant de 160 à 1000 nm.

La durée du flash est de préférence comprise dans un domaine allant de 0,05 à 20 millisecondes, notamment de 0,1 à 5 millisecondes. Le taux de répétition est de préférence compris dans un domaine allant de 0,1 à 5 Hz, notamment de 0,2 à 2 Hz.

Le rayonnement peut être issu de plusieurs lampes disposées côte à côte, par exemple 5 à 20 lampes, ou encore 8 à 15 lampes, de manière à traiter simultanément une zone plus large. Toutes les lampes peuvent dans ce cas émettre des flashs de manière simultanée.

La ou chaque lampe est de préférence disposée transversalement aux plus grands côtés du substrat. La ou chaque lampe possède une longueur de préférence d'au moins 1 m notamment 2 m et même 3 m de manière à pouvoir traiter des substrats de grande taille. L'utilisation d'une couche absorbante selon l'invention permet néanmoins d'utiliser des modules de plus faibles longueurs combinés entre eux pour atteindre la longueur souhaitée sans toutefois affecter l'homogénéité du traitement généralement induit par les zones de recouvrement entre les zones d'irradiation de chaque module.

Le condensateur est typiquement chargé à une tension de 500 V à 500 kV. La densité de courant est de préférence d'au moins 4000 A/cm$^2$. La densité d'énergie totale émise par les lampes flash, rapportée à la surface du revêtement, est de préférence comprise entre 1 et 100 J/cm$^2$, notamment entre 1 et 30 J/cm$^2$, voire entre 5 et 20 J/cm$^2$.

Selon un deuxième mode de réalisation préféré, le rayonnement est un rayonnement laser, notamment un rayonnement laser sous la forme d'au moins une ligne laser, de préférence focalisé sur la couche absorbante.

Le rayonnement laser est de préférence généré par des modules comprenant une ou plusieurs sources laser ainsi que des optiques de mise en forme et de redirection.

Les sources laser sont typiquement des diodes laser ou des lasers fibrés, notamment des lasers à fibre, à diodes ou encore à disque. Les diodes laser permettent d'atteindre de manière économique de fortes densités de puissance par rapport à la puissance électrique d'alimentation, pour un faible encombrement. L'encombrement des lasers fibrés est encore plus réduit, et la puissance linéique obtenue peut être encore plus élevée, pour un coût toutefois plus important. On entend par lasers fibrés des lasers dans lesquels le lieu de génération de la lumière laser est déporté spatialement par rapport à son lieu de délivrance, la lumière laser étant délivrée au moyen d'au moins une fibre optique. Dans le cas d'un laser à disque, la lumière laser est générée dans une cavité résonnante dans laquelle se trouve le milieu émetteur qui se présente sous la forme d'un disque, par exemple un disque mince (d'environ 0,1 mm d'épaisseur) en Yb:YAG. La lumière ainsi généré est couplée dans au moins une fibre optique dirigée vers le lieu de traitement. Le laser peut également être à fibre, au sens où le milieu d'amplification est lui-même une fibre optique. Les lasers à fibre ou à disque sont de préférence pompés optiquement à l'aide de diodes laser. Le rayonnement issu des sources laser est de préférence continu. Il peut alternativement être pulsé.

La longueur d'onde du rayonnement laser, donc la longueur d'onde de traitement, est de préférence comprise dans un domaine allant de 200 à 2500 nm, de préférence 500 à 1300 nm, notamment de 800 à 1100 nm. Des diodes laser de puissance émettant à une ou plusieurs longueurs d'onde choisie parmi 808 nm, 880 nm, 915 nm, 940 nm ou 980 nm se sont révélées particulièrement bien appropriées. Dans le cas d'un laser à disque, la longueur d'onde de traitement est par exemple de 1030 nm (longueur d'onde d'émission pour un laser Yb :YAG). Pour un laser à fibre, la longueur d'onde de traitement est typiquement de 1070 nm.

Le nombre de lignes laser et leur disposition sont avantageusement choisis pour que la totalité de la largeur du substrat soit traitée.

Plusieurs lignes disjointes peuvent être employées, par exemple disposées en quinconce ou en vol d'oiseau. En général, les lignes laser sont cependant combinées de sorte à former une seule ligne laser. Dans le cas de substrats de faible largeur, cette ligne laser peut être générée par un seul module laser. Pour des substrats de grande largeur en revanche, par exemple supérieure à 1 m, voire 2 m et même 3 m, la ligne laser résulte avantageusement de la combinaison d'une pluralité de lignes laser élémentaires générées chacune par des modules laser indépendants. La longueur de ces lignes laser élémentaires va typiquement de 10 à 100 cm, notamment de 30 à 75 cm, voire de 30 à 60 cm. Les lignes élémentaires sont de préférence disposées de manière à se superposer partiellement dans le sens de la longueur et présentent de préférence un décalage dans le sens de la largeur, ledit décalage étant inférieur à la demi-somme des largeurs de deux lignes élémentaires adjacentes.

On entend par « longueur » de la ligne la plus grande dimension de la ligne, mesurée sur la surface du revêtement dans une première direction, et par « largeur » la dimension selon la seconde direction, perpendiculaire à la première direction. Comme il est d'usage dans le domaine des lasers, la largeur w de la ligne correspond à la distance (selon cette seconde direction) entre l'axe du faisceau (où l'intensité du rayonnement est maximale) et le point où l'intensité du rayonnement est égale à 1/e$^2$ fois l'intensité maximale. Si l'axe longitudinal de la ligne laser est nommé x, on peut définir une distribution de largeurs selon cet axe, nommée w(x).

La largeur moyenne de la ou chaque ligne laser est de préférence d'au moins 35 $\mu$m, notamment comprise dans un domaine allant de 40 à 100 $\mu$m, voire de 40 à 70 $\mu$m, ou dans un domaine allant de 110 $\mu$m à 30 mm. Dans l'ensemble du présent texte on entend par « moyenne » la moyenne arithmétique. Sur toute la longueur de la ligne, la distribution de largeurs est de préférence étroite afin de limiter autant que faire se peut toute hétérogénéité de traitement. Ainsi, la différence entre la largeur la plus grande et la largeur la plus petite vaut de préférence au plus 10% de la valeur de la largeur moyenne. Ce chiffre est de préférence d'au plus 5% et même 3%. Dans certains modes de réalisation cette différence peut être supérieure à 10%, par exemple de 11 à 20%.

La puissance linéique de la ligne laser est de préférence d'au moins 50 W/cm, avantageusement 100 ou 150 W/cm, notamment 200 W/cm, voire 300 W/cm et même 350 W/cm. Elle est même avantageusement d'au moins 400 W/cm, notamment 500 W/cm, voire 600, 800 ou 1000 W/cm. La puissance linéique est mesurée à l'endroit où la ou chaque ligne laser est focalisée sur le revêtement. Elle peut être mesurée en disposant un détecteur de puissance le long de la ligne, par exemple un puissance-mètre calorimétrique, tel que notamment le puissance-mètre Beam Finder S/N 2000716 de la société Cohérent Inc. La puissance est avantageusement répartie de manière homogène sur toute la longueur de la ou chaque ligne. De préférence, la différence entre la puissance la plus élevée et la puissance la plus faible vaut moins de 10% de la puissance moyenne.

La couche absorbante selon l'invention s'avère adaptée à un traitement laser présente au moins une des caractéristiques 1 à 3 suivantes ou leurs combinaisons, notamment 1+2, 1+3 ou 1+2+3 :

1- une largeur moyenne de la ligne de 110 $\mu$m à 30 mm ;
2- une puissance linéique de 50 à 290 W/cm ;
3- différence entre la largeur la plus grande et la largeur la plus petite de 11% à 20% de la valeur de la largeur moyenne.

Selon un troisième mode de réalisation préféré, le rayonnement est un rayonnement issu d'une ou plusieurs lampes infra-rouge. La ou les lampes infra-rouge ont de préférence une puissance de 50 à 150 W/m². Leur spectre d'émission présente typiquement au moins 80% de l'intensité comprise entre 400 et 1500 nm avec un maximum entre 800 et 1000 nm.

Afin de traiter la totalité de la surface du substrat, un déplacement relatif entre la source de rayonnement et ledit substrat est de préférence créé. De préférence, en particulier pour les substrats de grande taille, la ou chaque source de rayonnement (notamment ligne laser ou lampe flash) est fixe, et le substrat est en mouvement, si bien que les vitesses de déplacement relatif correspondront à la vitesse de défilement du substrat. De préférence, la ou chaque ligne laser est sensiblement perpendiculaire à la direction de déplacement.

Le procédé selon l'invention présente l'avantage de ne chauffer que le revêtement, sans échauffement significatif de la totalité du substrat. Il n'est ainsi plus nécessaire de procéder à un refroidissement lent et contrôlé du substrat avant la découpe ou le stockage. Durant toute l'étape de traitement thermique, la température en tout point de la face du substrat opposée à celle portant la couche fonctionnelle est de préférence d'au plus 150°C, notamment 100°C et même 50°C.

La température maximale subie par chaque point du revêtement lors du traitement thermique est de préférence d'au moins 300°C, notamment 350°C, voire 400°C, et même 500°C ou 600°C, et de préférence inférieure à 800°C, voire inférieure à 700°C. La température maximale est notamment subie au moment où le point du revêtement considéré passe sous la ligne laser ou est irradié par le flash de lampe flash. A un instant donné, seuls les points de la surface du revêtement situés sous la ligne laser ou sous la lampe flash et dans ses environs immédiats (par exemple à moins d'un millimètre) sont normalement à une température d'au moins 300°C. Pour des distances à la ligne laser (mesurées selon la direction de défilement) supérieures à 2 mm, notamment 5 mm, y compris en aval de la ligne laser, la température du revêtement est normalement d'au plus 50°C, et même 40°C ou 30°C.

Chaque point du revêtement subit le traitement thermique (ou est porté à la température maximale) pendant une durée avantageusement comprise dans un domaine allant de 0,05 à 10 ms, notamment de 0,1 à 5 ms, ou de 0,1 à 2 ms. Dans le cas d'un traitement au moyen d'une ligne laser, cette durée est fixée à la fois par la largeur de la ligne laser et par la vitesse de déplacement relatif entre le substrat et la ligne laser. Dans le cas d'un traitement au moyen d'une lampe flash, cette durée correspond à la durée du flash.

Le substrat peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement. Si le substrat est en matière organique polymérique souple, le déplacement peut être réalisé à l'aide d'un système d'avance de films sous forme d'une succession de rouleaux.

Toutes les positions relatives du substrat et du laser sont bien entendu possibles, du moment que la surface du substrat peut être convenablement irradiée. Le substrat sera le plus généralement disposé de manière horizontale, mais il peut aussi être disposé verticalement, ou selon toute inclinaison possible. Lorsque le substrat est disposé horizontalement, le dispositif de traitement est généralement disposé de manière à irradier la face supérieure du substrat. Le dispositif de traitement peut également irradier la face inférieure du substrat. Dans ce cas, il faut que le système de support du substrat, éventuellement le système de convoyage du substrat lorsque ce dernier est en mouvement, laisse passer le rayonnement dans la zone à irradier. C'est le cas par exemple lorsque l'on utilise un rayonnement laser et des rouleaux de convoyage : les rouleaux étant disjoints, il est possible de disposer le laser dans une zone située entre deux rouleaux successifs.

La vitesse du mouvement de déplacement relatif entre le substrat et la ou chaque source de rayonnement (notamment la ou chaque ligne laser) est avantageusement d'au moins 2 m/min, notamment 5 m/min et même 6 m/min ou 7 m/min, ou encore 8 m/min et même 9 m/min ou 10 m/min. Celle-ci peut être ajustée en fonction de la nature de la couche fonctionnelle à traiter et de la puissance de la source de rayonnement utilisée.

Le dispositif de traitement thermique peut être intégré dans une ligne de dépôt de couches, par exemple une ligne de dépôt par pulvérisation cathodique assistée par champ magnétique (procédé magnétron), ou une ligne de dépôt chimique en phase vapeur (CVD), notamment assistée par plasma (PECVD), sous vide ou sous pression atmosphérique (APPECVD). La ligne comprend en général des dispositifs de manutention du substrat, une installation de dépôt, des dispositifs de contrôle optique, des dispositifs d'empilage. Les substrats, notamment en verre, défilent, par exemple sur des rouleaux convoyeurs, successivement devant chaque dispositif ou chaque installation.

Le dispositif de traitement thermique est de préférence situé juste après l'installation de dépôt du revêtement, par exemple à la sortie de l'installation de dépôt. Le substrat revêtu peut ainsi être traité en ligne après le dépôt du revêtement, à la sortie de l'installation de dépôt et avant les dispositifs de contrôle optique, ou après les dispositifs de contrôle optique et avant les dispositifs d'empilage des substrats.

Le dispositif de traitement thermique peut aussi être intégré à l'installation de dépôt. Par exemple, le laser ou la lampe flash peut être introduit dans une des chambres d'une installation de dépôt par pulvérisation cathodique, notamment dans une chambre où l'atmosphère est raréfiée, notamment sous une pression comprise entre $10^{-6}$ mbar et $10^{-2}$ mbar. Le dispositif de traitement thermique peut aussi être disposé en dehors de l'installation de dépôt, mais de manière à traiter un substrat situé à l'intérieur de ladite installation. Il suffit de prévoir à cet effet un hublot transparent à la longueur d'onde du rayonnement utilisé, au travers duquel le rayonnement viendrait traiter la couche. Il est ainsi possible de traiter une couche fonctionnelle (par exemple une couche d'argent) avant le dépôt subséquent d'une autre couche dans la même installation.

Que le dispositif de traitement thermique soit en dehors de ou intégré à l'installation de dépôt, ces procédé, dits en ligne ou en continu, sont préférables à un procédé en reprise dans lequel il serait nécessaire d'empiler les substrats de verre entre l'étape de dépôt et le traitement thermique.

Les procédés en reprise peuvent toutefois avoir un intérêt dans les cas où la mise en œuvre du traitement thermique selon l'invention est faite dans un lieu différent de celui où est réalisé le dépôt, par exemple dans un lieu où est réalisée la transformation du verre. Le dispositif de traitement thermique peut donc être intégré à d'autres lignes que la ligne de dépôt de couches. Il peut par exemple être intégré à une ligne de fabrication de vitrages multiples (doubles ou triples vitrages notamment), à une ligne de fabrication de vitrages feuilletés, ou encore à une ligne de fabrication de vitrages bombés et/ou trempés. Les vitrages feuilletés ou bombés ou trempés peuvent être utilisés aussi bien en tant que vitrages bâtiment ou automobile. Dans ces différents cas, le traitement thermique selon l'invention est de préférence réalisé avant la réalisation du vitrage multiple ou feuilleté. Le traitement thermique peut toutefois être mis en œuvre après réalisation du double vitrage ou du vitrage feuilleté.

Le dispositif de traitement thermique est de préférence disposé dans une enceinte close permettant de sécuriser les personnes en évitant tout contact avec le rayonnement et d'éviter toute pollution, notamment du substrat, des optiques ou de la zone de traitement.

Le procédé selon l'invention peut ainsi comprendre une étape de lavage après l'étape de traitement thermique. Cette étape de lavage réalisée à l'aide d'un solvant, typiquement l'eau, permet d'éliminer le résidu de la couche absorbante après traitement thermique. Dans un premier mode de réalisation, le lavage peut intervenir immédiatement après l'étape de traitement thermique. Dans un autre mode de réalisation, l'étape de lavage n'est au contraire pas réalisée immédiatement après l'étape de traitement thermique. En effet, il a été remarqué que le résidu de la couche absorbante après traitement thermique peut servir de substitut à l'utilisation d'un intercalaire entre les substrats traités lors du stockage. Dans ce cas, le procédé selon l'invention ne comprend de préférence pas d'étape de lavage entre l'étape de traitement thermique et un stockage subséquent du substrat. L'étape de lavage peut être réalisée juste avant les opérations d'intégration, par exemple dans un vitrage, notamment après stockage et transport éventuel des substrats. Cela est particulièrement avantageux lorsque l'agent absorbant est choisi parmi les particules de carbone. Le résidu de couche absorbante comprend en effet dans ce cas des particules de carbone non liées au substrat qui jouent de rôle de lubrifiant lorsque les substrats traités sont empilés entre eux.

La présente invention a également pour objet un substrat revêtu d'un revêtement comprenant une couche fonctionnelle, ledit revêtement étant surmontée d'une couche absorbante selon l'invention ayant subi un traitement thermique. Une telle couche traitée peut comprendre notamment des particules de carbones non liées au substrat.

Dans le cas d'un substrat de verre, le matériau obtenu par le procédé selon l'invention peut former ou être intégré à un vitrage, notamment pour le bâtiment ou le transport. Il peut s'agir par exemple d'un vitrage multiple (double, triple...), d'un vitrage monolithique, d'un vitrage bombé, d'un vitrage feuilleté. Dans le cas des couches à base d'oxyde de titane autonettoyantes, le matériau peut notamment constituer la première feuille d'un vitrage multiple, la couche fonctionnelle étant positionné en face 1 dudit vitrage. Dans le cas des couches à base d'argent, la couche fonctionnelle est de préférence positionnée à l'intérieur du vitrage multiple.

Le matériau obtenu par le procédé selon l'invention peut encore être intégré à une cellule photovoltaïque. Dans le cas des couches à base de silice antireflets telles que mentionnées précédemment, le matériau qui en est revêtu peut former la face avant d'une cellule photovoltaïque.

Le matériau obtenu par le procédé selon l'invention peut encore être intégré à un écran de visualisation ou un dispositif d'éclairage ou une cellule photovoltaïque, en tant que substrat muni d'une électrode.

L'invention est illustrée à l'aide des exemples de réalisation non limitatifs qui suivent.

Tous les essais sont réalisés sur un vitrage formé par une feuille de verre Planiclear® portant sur une de ses faces un empilement bas émissif constitué des couches successives suivantes (les valeurs entre parenthèse correspondent aux épaisseurs des couches exprimées en nm) : //$TiO_2$(24)/ZnO(4)/Ag(13,5)/Ti(0,4)/ZnO(4)/$TiO_2$(12)/$Si_3N_4$(30)

On prépare cinq d'échantillons (Ex1 et Ex2 selon l'invention, et CEx1, CEx2 et CEx 3 comparatifs) qui diffèrent par la surcouche absorbante déposée avant traitement laser.

Pour l'exemple 1, une couche absorbante comprenant des particules de noir de carbone dispersées dans une matrice organique à base de polymère acrylate a été déposée de la façon suivante. 7% en poids de particules de noir de carbone ont été dispersées dans une suspension de polymère acrylate. La suspension a été déposée par enduction au rouleau et séchée à température ambiante.

Pour l'exemple 2, une couche de 1 $\mu$m de particules de noir de carbone a été déposée de la façon suivante. 2% en poids de particules de noir de carbone présentant un diamètre moyen de 500 nm ont été dispersées dans une solution aqueuse de tensioactif à l'aide d'un traitement par ultrasons. La suspension a été déposée à l'aide d'une racle et séchée à température ambiante.

Pour l'exemple comparatif 1, une couche de 5 $\mu$m d'une encre noire commercialisée sous la référence LF-140 BLACK par Mimaki Engineering a été déposée au rouleau et séchée à température ambiante.

Pour l'exemple comparatif 2, une couche métallique de SnZn de 2nm a été déposée par pulvérisation cathodique.

Pour l'exemple comparatif 3, une couche de carbone de 10nm a été déposée par pulvérisation cathodique.

Les échantillons ont été soumis à un traitement thermique par une ligne laser ayant les caracéristiques suivantes : longueur d'onde 915 nm et 980 nm ; longueur de la ligne 30 cm ; largeur de la ligne au plan focal 45 $\mu$m avec une variation de +/- 10 $\mu$m le long de la ligne. La vitesse de défilement des substrats, fixée à 36 m/min, présente une variation de +/- 5% au cours du traitement. La puissance linéique du laser, qui présente une homogénéité de +/- 10% le long de la ligne, a été fixée de sorte à obtenir un gain comparable d'au moins 20% pour chacun des exemples.

Le gain de conductivité est défini comme la différence entre la $R\square$ initiale (avant traitement thermique) et la $R\square$ finale (après traitement thermique) rapporté à la $R\square$ initiale :

$$\mathtt{Gain(\%)=(R\square_{initiale}-R\square_{finale})/R\square_{initiale}}$$

Le tableau ci-dessous indique, pour chaque échantillon, l'absorption de la couche absorbante aux longueurs d'onde du rayonnement laser, le gain de conductivité et la visibilité des défauts dus aux inhomogénéités de traitement après traitement thermique.

La visibilité des défauts dus aux inhomogénéités de traitement est évaluée par un opérateur à l'œil nu selon le système de notation suivant :

++ : aucun défaut n'est perceptible à l'œil nu,

+ : des défauts localisés, limités à certaines zones de l'échantillon, sont perceptibles à l'œil nu sous éclairement diffus intense (> 800 lux),

- : des défauts localisés et limités à certaines zones de l'échantillon sont perceptibles à l'œil nu sous éclairement standard (< 500 lux) et

-- : des défauts étendus à toute la surface de l'échantillon sont perceptibles à l'œil nu sous éclairement standard (< 500 lux).

[Table 1]

|  | Ex 1 | Ex2 | CEx 1 | CEx 2 | CEx 3 |
|---|---|---|---|---|---|
| Absorption du rayonnement laser (%) | >80% | >90% | <50% | <30% | <20% |
| Puissance du laser (W/cm) | 200 | 150 | 320 | 320 | 320 |
| Gain (%) | 22 | 22 | 21 | 20 | 20 |
| Visibilité des défauts | + | ++ | - | -- | -- |

Les cinq échantillons présentent, après traitement thermique, des valeurs d'absorption lumineuse et de résistance par carré à peu près équivalentes. Les défauts dus aux inhomogénéités de traitement sont significativement moins visibles pour les exemples 1 et 2 selon l'invention par rapport aux exemples comparatifs.

## EP 3 917 893 B1

**Revendications**

1. Procédé d'obtention d'un matériau comprenant un substrat revêtu sur une de ses faces d'un revêtement comprenant une couche fonctionnelle, ledit procédé comprenant :

   - une étape de dépôt de la couche fonctionnelle sur le substrat, puis
   - une étape de dépôt d'une couche absorbante au-dessus de ladite couche fonctionnelle, puis
   - une étape de traitement thermique au moyen d'un rayonnement, ledit rayonnement possédant au moins une longueur d'onde de traitement comprise entre 200 et 2500 nm, ladite couche absorbante étant au contact de l'air durant cette étape de traitement thermique,

   **caractérisé en ce que** la couche absorbante absorbe au moins 80% du rayonnement utilisé lors du traitement thermique et transmet moins de 10% de celui-ci.

2. Procédé selon la revendication 1, **caractérisé en ce que** la couche absorbante comprend au moins 5% en poids d'un agent absorbant le rayonnement.

3. Procédé selon la revendication 1 ou 2, **caractérisé en ce que** la couche absorbante comprend un agent absorbant le rayonnement dispersé dans une matrice organique.

4. Procédé selon la revendication 3, **caractérisé en ce que** la matrice organique est à base de polymère soluble dans l'eau, dispersable dans l'eau et/ou éliminable par décomposition thermique au moins en partie lors de l'étape de traitement thermique, de préférence choisi parmi les polymères comprenant un ou plusieurs homopolymères ou copolymères d'amidon, de caséine, d'acrylates, d'acrylamide, de glycols tel que l'éthylène glycol, d'acétate de vinyle, d'alcool vinylique, de vinylpyrrolidone, des copolymères styrène/acide acrylique, des copolymères éthylène/acide acrylique, et de la cellulose ou ses dérivés.

5. Procédé selon l'une des revendications 3 à 4, **caractérisé en ce que** la matrice organique est à base de polymère acrylate, de préférence obtenu par polymérisation de composés (méth)acrylate choisis parmi des monomères, des oligomères, des prépolymères ou des polymères comprenant au moins une fonction (méth)acrylate.

6. Procédé selon l'une des revendications 3 à 5, **caractérisé en ce que** la couche absorbante a une épaisseur de 1 à 50 $\mu$m.

7. Procédé selon l'une des revendications 1 à 2, **caractérisé en ce que** la couche absorbante comprend au moins 50% en poids d'un agent absorbant le rayonnement.

8. Procédé selon la revendication 7, **caractérisé en ce que** la couche absorbante a une épaisseur de 0,5 à 5 $\mu$m.

9. Procédé selon l'une des revendications 1 à 8, **caractérisé en ce que** l'agent absorbant le rayonnement est choisi parmi les particules de carbone, notamment les particules de de noir de carbone, de graphite, de graphène, de nanotubes de carbone, ou les mélanges de ceux-ci.

10. Procédé selon l'une des revendications 1 à 9, **caractérisé en ce que** le rayonnement est choisi parmi un rayonnement laser, un rayonnement issu d'une lampe infra-rouge ou un rayonnement issu d'une lampe flash.

11. Procédé selon l'une des revendications 1 à 10, **caractérisé en ce qu'**il ne comprend pas d'étape de lavage entre l'étape de traitement thermique et un stockage subséquent du substrat revêtu.

12. Matériau comprenant un substrat revêtu sur au moins une de ses faces d'un revêtement comprenant une couche fonctionnelle et une couche absorbante située au-dessus de la couche fonctionnelle **caractérisé en ce que** la couche absorbante comprend au moins 5% en poids de particules de carbone.

**Patentansprüche**

1. Verfahren zum Gewinnen eines Materials, umfassend ein Substrat, das auf einer seiner Flächen mit einer Beschichtung beschichtet ist, umfassend eine Funktionsschicht, das Verfahren umfassend:

- einen Schritt eines Abscheidens der Funktionsschicht auf dem Substrat, dann
- einen Schritt des Abscheidens einer Absorptionsschicht über der Funktionsschicht, dann
- einen Wärmebehandlungsschritt mittels einer Bestrahlung, wobei die Bestrahlung mindestens eine Behandlungswellenlänge zwischen 200 und 2500 nm besitzt, wobei die Absorptionsschicht während dieses Wärmebehandlungsschritts mit der Luft in Kontakt ist,

**dadurch gekennzeichnet, dass** die Absorptionsschicht mindestens 80 % der bei der Wärmebehandlung verwendeten Bestrahlung absorbiert und weniger als 10 % davon durchlässt.

2. Verfahren nach Anspruch 1, **dadurch gekennzeichnet, dass** die Absorptionsschicht mindestens zu 5 Gew.-% ein Mittel, das die Bestrahlung absorbiert, umfasst.

3. Verfahren nach Anspruch 1 oder 2, **dadurch gekennzeichnet, dass** die Absorptionsschicht ein Mittel, das die Bestrahlung absorbiert, das in einer organischen Matrix dispergiert ist.

4. Verfahren nach Anspruch 3, **dadurch gekennzeichnet, dass** die organische Matrix auf einem Polymer basiert, das wasserlöslich, in Wasser dispergierbar und/oder mindestens teilweise bei dem Wärmebehandlungsschritt durch Thermolyse entfernbar ist, das vorzugsweise aus Polymeren ausgewählt ist, umfassend ein oder mehrere Homopolymere oder Copolymere von Stärke, Casein, Acrylaten, Acrylamid, Glycolen wie Ethylenglycol, Vinylacetat, Vinylalkohol, Vinylpyrrolidon, Styrol/Acrylsäure-Copolymeren, Ethylen/Acrylsäure-Copolymeren und Cellulose oder Derivaten davon.

5. Verfahren nach einem der Ansprüche 3 bis 4,
   **dadurch gekennzeichnet, dass** die organische Matrix auf Acrylatpolymer basiert, das vorzugsweise durch Polymerisation von (Meth)acrylatverbindungen, die aus Monomeren, Oligomeren, Präpolymeren oder Polymeren ausgewählt sind, umfassend mindestens eine (Meth)acrylatwirkung, erhalten wird.

6. Verfahren nach einem der Ansprüche 3 bis 5,
   **dadurch gekennzeichnet, dass** die Absorptionsschicht eine Dicke von 1 bis 50 $\mu$m aufweist.

7. Verfahren nach einem der Ansprüche 1 bis 2,
   **dadurch gekennzeichnet, dass** die Absorptionsschicht mindestens zu 50 Gew.-% ein Mittel, das die Bestrahlung absorbiert, umfasst.

8. Verfahren nach Anspruch 7, **dadurch gekennzeichnet, dass** die Absorptionsschicht eine Dicke von 0,5 bis 5 $\mu$m aufweist.

9. Verfahren nach einem der Ansprüche 1 bis 8,
   **dadurch gekennzeichnet, dass** das Mittel, das die Bestrahlung absorbiert, aus Kohlenstoffpartikeln, besonders den Teilchen von Ruß, Graphit, Graphen, Kohlenstoffnanoröhrchen oder Mischungen davon ausgewählt ist.

10. Verfahren nach einem der Ansprüche 1 bis 9,
    **dadurch gekennzeichnet, dass** die Bestrahlung aus einer Laserbestrahlung, einer von einer Infrarotlampe stammenden Bestrahlung oder einer von einer Blitzlampe stammenden Bestrahlung ausgewählt ist.

11. Verfahren nach einem der Ansprüche 1 bis 10,
    **dadurch gekennzeichnet, dass** es keinen Abspülschritt zwischen dem Wärmebehandlungsschritt und einer anschließenden Lagerung des beschichteten Substrats umfasst.

12. Material, umfassend ein Substrat, das auf mindestens einer seiner Seiten mit einer Beschichtung beschichtet ist, umfassend eine Funktionsschicht und eine Absorptionsschicht, die über der Funktionsschicht gelegen ist, **dadurch gekennzeichnet, dass** die Absorptionsschicht mindestens zu 5 Gew.-% Kohlenstoffpartikel umfasst.

**Claims**

1. A process for obtaining a material comprising a substrate coated on one of its sides with a coating comprising a functional layer, said process comprising:

- a step of depositing the functional layer on the substrate, then
- a step of depositing an absorbent layer on top of said functional layer, then
- a step of heat treatment by radiation means, said radiation having at least one treatment wavelength comprised between 200 and 2500 nm, said absorbent layer being in contact with air during this heat treatment step, **characterized in that** the absorbent layer absorbs at least 80% of the radiation used during the heat treatment and transmits less than 10% thereof.

2. The process as claimed in claim 1, **characterized in that** the absorbent layer comprises at least 5% by weight of a radiation-absorbing agent.

3. The process as claimed in claim 1 or 2, **characterized in that** the absorbent layer comprises a radiation-absorbing agent dispersed in an organic matrix.

4. The process as claimed in claim 3, **characterized in that** the organic matrix is based on a polymer which is soluble in water, dispersible in water and/or eliminable by thermal decomposition at least in part during the heat treatment step, preferably selected from polymers comprising one or more starch homopolymers or copolymers, casein, acrylates, acrylamide, glycols such as ethylene glycol, vinyl acetate, vinyl alcohol, vinyl pyrrolidone, styrene/acrylic acid copolymers, ethylene/acrylic acid copolymers, and cellulose or derivatives thereof.

5. The process as claimed in one of claims 3 to 4, **characterized in that** the organic matrix is based on acrylate polymer, preferably obtained by polymerization of (meth)acrylate compounds selected from monomers, oligomers, prepolymers or polymers comprising at least one (meth)acrylate function.

6. The process as claimed in one of claims 3 to 5, **characterized in that** the absorbent layer has a thickness of 1 to 50 $\mu$m.

7. The process as claimed in one of claims 1 to 2, **characterized in that** the absorbent layer comprises at least 50% by weight of a radiation-absorbing agent.

8. The process as claimed in claim 7, **characterized in that** the absorbent layer has a thickness of 0.5 to 5 $\mu$m.

9. The process as claimed in one of claims 1 to 8, **characterized in that** the radiation-absorbing agent is selected from carbon particles, in particular particles of carbon black, graphite, graphene, carbon nanotubes, or mixtures thereof.

10. The process as claimed in one of claims 1 to 9, **characterized in that** the radiation is selected from laser radiation, radiation from an infrared lamp or radiation from a flash lamp.

11. The process as claimed in one of claims 1 to 10, **characterized in that** it does not comprise a washing step between the heat treatment step and a subsequent storage of the coated substrate.

12. A material comprising a substrate coated on at least one of its sides with a coating comprising a functional layer and an absorbent layer located above the functional layer, **characterized in that** the absorbent layer comprises at least 5% by weight of carbon particles.

## RÉFÉRENCES CITÉES DANS LA DESCRIPTION

**Documents brevets cités dans la description**

- WO 2010139908 A